# EUROPEAN PATENT APPLICATION

(11) **EP 3 100 973 A1**
(43) Date of publication of application: **07.12.2016**
(21) Application number: 14880574.0
(22) Date of filing: 29.09.2014
(51) Int. Cl.: B66F 9/06, B62D 9/00, B62D 61/10

(54) **FOUR-DIRECTION TRAVELING INDUSTRIAL VEHICLE AND MOVING MECHANISM THEREOF**

(30) Priority: 28.01.2014 CN 201410040648
(71) Applicant: Noblelift Equipment Joint Stock Co., Ltd, Zhejiang 313100 (CN)
(72) Inventor: FANG, Yong, Huzhou Zhejiang 313100 (CN); ZHOU, Xuejun, Huzhou Zhejiang 313100 (CN); PENG, Feiyu, Huzhou Zhejiang 313100 (CN); JIANG, Haibo, Huzhou Zhejiang 313100 (CN)
(74) Representative: Eisenführ Speiser
(86) International application number: PCT/CN2014/087732
(87) International publication number: WO 2015/113406

(57) **Abstract**

The present disclosure discloses industrial vehicle moving vans and in particular discloses an industrial vehicle capable of driving in four directions and a traveling mechanism for the industrial vehicle. The present disclosure is realized by the following technical schemes: a traveling mechanism for an industrial vehicle capable of driving in four directions comprises four wheel sets arranged at the bottom of the vehicle body, wherein the wheel sets can be sequentially connected to form a quadrangle; one wheel set is a rotating wheel set, another wheel set is a reversible directional wheel set, and the axis direction of the rotating wheels can be switched between two directions through the rotating action of a rotating shaft of the wheel set; the other two wheel sets are variable-state wheel sets, and the rotating wheel state can be switched between a directional state and a follow-up universal state. The present disclosure is simple in structure and low in cost and has good supporting stability, and the usage range, usage efficiency and maneuvering capability of the industrial vehicle are facilitated.

## Description

### BACKGROUND OF THE INVENTION

### 1. Technical Field

The present disclosure relates to industrial moving vans, and in particular, to an industrial vehicle capable of driving in four directions and a traveling mechanism for the industrial vehicle.

### 2. Description of Related Art

In the prior art, comprising common moving vans in which the straight forward direction is consistent with a length direction of fork and vertical side moving vans in which the straight forward direction is consistent with the length direction of fork.

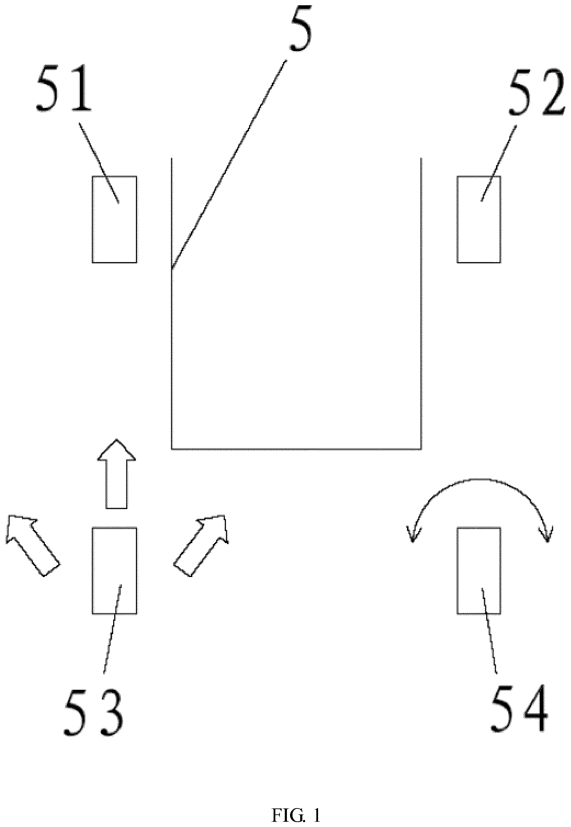

A common moving van traveling mechanism as shown in FIG.1, including a fork I 5, a left front wheel I 51, a right front wheel I 52, a left rear wheel I 53 and a right rear wheel I 54, wherein the left rear wheel I 53 is a driving wheel; the driving wheel is controlled by an operator to move forwards, backwards or steer; the two front wheels serve as guide wheels and are generally directional wheels; the right rear wheel I 54 is generally a follow-up universal wheel; the moving van can freely move forwards or backwards or turn; however, while turning in a narrow space, high operating difficulty is caused.

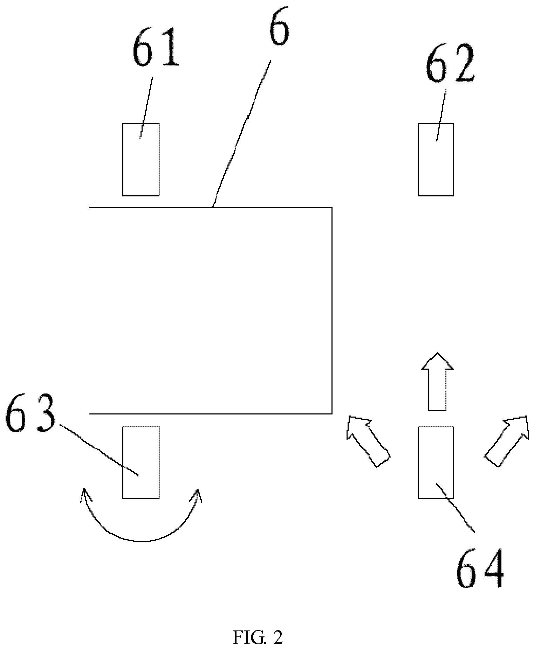

A side moving van traveling mechanism as shown in FIG.2, including a fork II 6, a left front wheel II 61, a right front wheel II 62, a left rear wheel II 63 and a right rear wheel II 64, wherein the right rear wheel II 64 is a driving wheel; the driving wheel is controlled by an operator to move forwards, backwards or steer; the two front wheels serve as guide wheels and are generally directional wheels; the left rear wheel II 63 is generally a follow-up universal wheel; the moving van can freely move forwards or backwards or turn; however, while turning in a narrow space, high operating difficulty is caused.

In the technical field, the previous common moving van and side moving van cannot be effectively combined into a whole, although the existing improvement includes:

A four-wheel synchronous steering mechanism for an electric counterbalanced forklift disclosed by a utility model patent with the authorization publication number of CN2288896Y, including a motor used for driving a hydraulic oil pump, a hydraulic steering gear connected with the hydraulic oil pump through a pipeline, a chain wheel cylinder controlled by the hydraulic steering gear, and a steering chain driven by the chain wheel cylinder, wherein the steering chain drives a wheel-rotating shaft to realize four-wheel synchronous steering by virtue of the chain wheels which are respectively mounted on the wheel-rotating shaft; according to the traveling mechanism, theoretically the moving van can move straight forward to each direction under the condition that the vehicle body does not steer, so that the adaptive capacity of the moving van to the environment is improved; however, according to the four-wheel synchronous steering, the vehicle only can move straight forward and cannot turn; the moving van is complicated in structure and high in cost during direct manufacturing, and when a common moving van or side moving van is modified by transformation, the vehicle is wide in changing range, complicated in structure, high in cost and high in transformation difficulty.

A universal driving forklift disclosed by an invention patent application with the publication number of CN1789105A, comprising a frame, wherein the frame is connected with a front axle; the front axle is connected with a portal frame; the left and right front wheels are arranged at two ends of the front axle; left and right synchronous gear sets are fixed on the front axle; rear wheels are arranged at the rear end of the frame; rear rotating wheels are arranged on the rear wheels; an electromagnetic brake clutch is mounted in the middle of the frame; a left front wheel steering gear is fixed on the left front wheel; a right front wheel steering gear is fixed on the right front wheel and is connected with a lower gear of the right synchronous gear set; an upper gear of the right synchronous gear set is connected with an upper gear of the left synchronous gear set; an intermediate gear of the left synchronous gear set is connected with the left front wheel steering gear; a lower gear of the left synchronous gear set is connected with a lower gear of the electromagnetic brake clutch; an upper gear of the electromagnetic brake clutch is connected with the rear wheel steering gear; the traveling mechanism is of a three-supporting-point structure and adopts a steering mode of simultaneously steering three wheels; and therefore theoretically the moving van can move straight forward in each direction under the condition that the vehicle body does not steer, so that the adaptive capacity of the moving van to the environment is improved; although it is claimed that the vehicle can turn and has a relatively small turning radius, the axes of the two front wheels present two parallel lines which never intersect, actually the vehicle cannot realize turning where the wheel body does not produce sliding friction with the ground, namely real vehicle turning, under the condition that a spacing exists between the two front wheels; and moreover, the traveling mechanism is unstable to support; and when a common moving van or the side moving van is modified by transformation, the vehicle body is wide in changing range, complicated in structure, high in cost and high in transformation difficulty.

### SUMMARY OF THE INVENTION

The present disclosure aims to disclose a traveling mechanism for an industrial vehicle capable of driving in four directions. The traveling mechanism is simple in structure and low in cost and has good supporting stability. According to the traveling mechanism, the industrial vehicle can realize the driving mode of a common moving van and the driving mode of a side moving van in the background, and conversion between the two driving modes can be conveniently realized. Meanwhile, the flexibility of the common moving van and the side moving van while turning is not reduced in the background, namely the turning radius is not increased, so that the application range of the industrial vehicle is widened, and the usage efficiency and maneuvering capability of the industrial vehicle are improved.

The technical purpose of the present disclosure is realized through the following technical schemes: a traveling mechanism for an industrial vehicle capable of driving in four directions includes four wheel sets arranged at the bottom of the vehicle body, wherein the wheel sets can be sequentially connected to form a quadrangle; one wheel set is a rotating wheel set, another wheel set is a reversible directional wheel set, and the axis direction of the rotating wheels can be switched between two directions through the rotating action of a rotating shaft of the wheel set; the other two wheel sets are variable-state wheel sets, and the rotating wheel state can be switched between a directional state and a follow-up universal state.

According to the variable-state wheel sets, an included angle formed between the axis direction of the rotating wheel in one variable-state wheel set switched into a directional state and the axis direction of the rotating wheel in the other variable-state wheel set switched into a directional state and a rotatable angle of the rotating shaft of the reversible directional wheel set are mutually supplementary angles; particularly, when the previous included angle is 90 degrees, the rotatable angle of the rotating shaft of the reversible directional wheel set is 90 degrees.

As a preference of the present disclosure, the rotating wheel group and the reversible directional wheel set are positioned at one diagonal position of the quadrangle, and the two variable-state wheel sets are positioned at the other diagonal position of the quadrangle.

The rotating wheel group is generally a driving wheel group; so that the four wheel sets can be sequentially connected to form a quadrangle in that the four wheel sets are respectively positioned at four corners of the quadrangle; the four wheel sets are respectively a wheel set I, a wheel set II, a wheel set III and a wheel set IV, the wheel set I and the wheel set III are positioned at one diagonal position of the quadrangle, the wheel set II and the wheel set IV are positioned at the other diagonal position of the quadrangle, the wheel set IV is a rotating wheel set, in a wheel set distribution state, when the rotating wheel of the wheel set II is fixed at a position, the rotating wheel of the wheel set I is switched into a directional wheel state, the axis direction of the rotating wheel in the wheel set II coincides with or is parallel to the axis direction of the rotating wheel in the wheel set I, and then, the rotating wheel of the wheel set III is in a follow-up universal state; and when the rotating wheel in the wheel set II is fixed at a position forming an angle of approximately 90 degrees with the previous position, the rotating wheel in the wheel set III is switched into a directional wheel state, the axis direction of the rotating wheel in the wheel set II coincides with or is parallel to the axis direction of the rotating wheel in the wheel set III, and then, the rotating wheel of the wheel set I is in a follow-up universal state.

As a preference of the present disclosure, the traveling mechanism also includes a mode selection switch capable of switching the driving mode between a vertical driving mode and a transverse driving mode;

When the mode selection switch is selected as the vertical driving mode, the rotating wheels in one wheel set in the two variable-state wheel sets adjacent to the rotating wheel set are switched into a directional state, while the rotating wheels in the other wheel set of the two wheel sets are switched into a follow-up universal state; and moreover, the axis direction of rotating wheels of the reversible directional wheel set diagonal to the rotating wheel set is fixed at a position which coincides with or is parallel to the axis direction of the rotating wheels of the variable-state wheel set switched into the directional state;

When the mode selection switch is selected as the transverse driving mode, the rotating wheels positioned in the follow-up universal state in the two variable-state wheel sets adjacent to the rotating wheel set are switched into a directional state, another rotating wheel positioned in a directional state is switched into a follow-up universal state, and rotating wheels in the reversible directional wheel set diagonal to the rotating wheel set rotate so as to allow the axis direction of the rotating wheels to be fixed at a position which coincides with or is parallel to the axis direction of the rotating wheels switched into the directional state.

The vertical driving mode is a driving mode where the straight driving direction is parallel to or approximately parallel to a length direction of fork; and the transverse driving mode is a driving mode that a straight driving direction is perpendicular to or approximately perpendicular to a length direction of fork.

As a preference of the present disclosure, the variable-state wheel sets include rotating shafts driving the rotating wheels to steer, and limiting and positioning pieces capable of locking and loosening the rotating shafts to rotate and move.

As a preference of the present disclosure, the limiting and positioning pieces include moving parts, converting pieces which are connected between the moving parts and the rotating shafts and are used for converting the rotating motion of the rotating shafts around the axis thereof into a linear reciprocating motion of the moving parts, as well as positioning pieces capable of fixing the moving parts so as to limit the rotating motion of the rotating shafts.

As a preference of the present disclosure, each converting piece includes a linkage rod of which one end is rotationally connected to the moving part, and a rotating arm of which one end is fixedly connected to the rotating shaft and the other end is rotationally connected to the other end of the linkage rod; rotational connection of the rotating arm and the linkage rod is positioned on an axis deviating from the rotating shaft in the horizontal direction.

As a preference of the present disclosure, the rotating arm includes a working surface; the limiting and positioning piece also includes an auxiliary positioning piece; and when the rotating wheels in the corresponding variable-state wheel set are switched into a directional state, the auxiliary positioning piece includes a pressing surface pressing on the working surface, so that the rotating arm is fixed.

When the rotating wheels of the corresponding variable-state wheel sets are switched into the directional state, forced directions between the working surface and the pressing surface are intersected on the axis of the rotating shaft fixed with the rotating arm; under general conditions, due to the positioning pieces, the rotating arm can be fixed, however, the stability is low, particularly under the condition that the industrial vehicle has a large load, on one hand, when the follow-up universal state is switched into a directional state, the force of the positioning pieces is large, on the other hand, during the driving process, the force of the positioning pieces of the variable-state wheel sets positioned in the directional state is large, and in all likelihood when the industrial vehicle turns, due to the influence of frictional force stressed by the rotating wheel, the rotating arm will generate a rotating action; due to the auxiliary positioning pieces, the pressing surface is matched with the working surface, so that the directional state of the rotating wheels of the variable-state wheel sets can be further stabilized; and when the directional state needs to be switched into a follow-up directional state, the rotating arm is loosened by the auxiliary positioning pieces so as to facilitate free rotation of the rotating arm; and the positioning pieces and the auxiliary positioning pieces can be cylinders and other telescopic pieces.

As a preference of the present disclosure, the reversible directional wheel set includes a mounting plate, a rotating shaft capable of being rotationally supported on the mounting plate, a wheel stand which is fixedly arranged on the rotating shaft, a rotating wheel arranged on the wheel stand, and a steering piece used for driving the wheel stand to rotate.

The steering piece is controlled by the mode selection switch, so that the wheel stand rotates clockwise or anticlockwise in the corresponding driving mode.

As a preference of the present disclosure, the rotating wheel set is an electric driving wheel with an electric steering device.

As a preference of the present disclosure, the four wheel sets are respectively a wheel set I, a wheel set II, a wheel set III and a wheel set IV, and the wheel set IV is a rotating wheel set; the wheel set I includes a moving part I, a mounting plate I, a rotating shaft I which can be rotationally connected to the mounting plate I and drives the rotating wheel of the wheel set I to steer, a converting piece I which is connected between the moving part I and the rotating shaft I and is used for converting the rotating motion of the rotating shaft I around the axis thereof into a linear reciprocating motion of the moving part I, as well as a positioning piece I capable of fixing the moving part I so as to limit the rotating motion of the rotating shaft I;

The wheel set II includes a mounting plate II, a rotating shaft II capable of being rotationally supported on the mounting plate II, a wheel stand II which is fixedly arranged on the rotating shaft II, a rotating wheel II arranged on the wheel stand II, and a steering piece II used for driving the wheel stand II to rotate by ±90 degrees;

The wheel set III includes a moving part III, a mounting plate III, a rotating shaft III which can be rotationally connected to the mounting plate III and drives the rotating wheel of the wheel set III to steer, a converting piece III which is connected between the moving part III and the rotating shaft III and is used for converting the rotating motion of the rotating shaft III around the axis thereof into a linear reciprocating motion of the moving part III, as well as a positioning piece III capable of fixing the moving part III so as to limit the rotating motion of the rotating shaft III.

As a preference of the present disclosure, the converting piece I includes a linkage rod I of which one end is rotationally connected to the moving part I, and a rotating arm I of which one end is fixedly connected to the rotating shaft I and the other end is rotationally connected to the other end of the linkage rod I; rotational connection of the rotating arm I and the linkage rod I is positioned on an axis deviating from the rotating shaft I in the horizontal direction.

As a preference of the present disclosure, the converting piece III includes a linkage rod III of which one end is rotationally connected to the moving part III, and a rotating arm III of which one end is fixedly connected to the rotating shaft III and the other end is rotationally connected to the other end of the linkage rod III; rotational connection of the rotating arm III and the linkage rod III is positioned on an axis deviating from the rotating shaft III in the horizontal direction.

The previous converting piece is simple in structure and easy to mount; certainly, the converting pieces also can be in other forms, for example, a gear meshed with the rotating shaft is arranged on the mounting plate, and a connecting rod which is rotationally connected with the moving part is rotationally connected to an eccentric position of the gear.

As a preference of the present disclosure, the positioning piece I is a cylinder I; and the moving part I is a piston rod of the cylinder I or another part.

As a preference of the present disclosure, the positioning piece III is a cylinder III; and the moving part III is a piston rod of the cylinder III or another part.

The previous other part is that the moving part is not just the piston rod of the cylinder. For example, the moving part can be a slide block, and the slide block can be fixedly connected to the piston rod and also can be not connected to the piston rod.

As a preference of the present disclosure, the wheel set I also includes movable guide rails I suitable for the moving part I.

As a preference of the present disclosure, two total guide rails I are symmetrically distributed along the movement track of the moving part I; and grooves I suitable to be connected with the moving part I in a sleeving manner are formed on opposite sides of the two guide rails I.

As a preference of the present disclosure, the wheel set III also includes movable guide rails III suitable for the moving part III.

As a preference of the present disclosure, two total guide rails III are symmetrically distributed along the movement track of the moving part III; and grooves III suitable to be connected with the moving part III in a sleeving manner are formed on opposite sides of the two guide rails III.

Another aim of the present disclosure is to disclose a traveling mechanism for an industrial vehicle capable of driving in four directions, including five wheel sets arranged at the bottom of the vehicle body, wherein one wheel set is a rotating wheel set; another wheel set is a reversible directional wheel set, and the axis direction of the rotating wheels can be switched between two directions through the rotating action of a rotating shaft of the wheel set; another wheel set is a universal wheel set; and the other two are variable-state wheel sets, and the rotating wheel state can be switched between a directional state and a follow-up universal state; a reversible directional wheel set, wherein the two variable-state wheel sets are positioned on one diagonal of the quadrangle, the reversible directional wheel set and the universal wheel set are positioned on another diagonal of the quadrangle, and the rotating wheel set is positioned on a central axis of the industrial vehicle positioned between two forks.

Another aim of the present disclosure is to disclose an industrial vehicle including any one of the previous technical schemes.

In conclusion, the present disclosure has the following beneficial effects: the present disclosure is simple in structure and easy to implement; the moving van applied to the present disclosure can be switched between the driving mode of a common moving van and the driving mode of a side moving van, although universal driving cannot be realized in patent documents provided by the background, while straight driving, driving parallel to or approximately parallel to a length direction of fork or driving perpendicular to or approximately perpendicular to a length direction of fork can be realized under the condition where the vehicle body does not steer, so that the adaptive capacity of the moving van to the driving environment is improved; and moreover, only three wheel sets except the steering wheel set are transformed in the present disclosure, the transformation structure is relatively independent, and necessary mechanical linkage is not needed among the three wheel sets, so that the transformation range is narrow, and change of the vehicle body is small. Therefore, the present disclosure is easy to implement, low in cost and simple and convenient to maintain. Moreover, the present disclosure is of a four-wheel supporting structure and is high in walking stability, and the driving mode is easy and rapid to switch by operating the mode selection switch; according to the rotating wheel of the wheel set I and the rotating wheel of the wheel set III, in order to allow the driving mode of the common moving van or the driving mode of the lateral moving van to be switched between the universal wheel and the directional wheel, turning of the vehicle body can be realized regardless of the driving mode, so that the driving stability is improved, and a relatively small turning radius can be kept.

### BRIEF DESCRIPTION OF THE SEVERAL VIEWS OF THE DRAWINGS

FIG. 1 shows the schematic diagram of a common moving van traveling mechanism in the background;
FIG. 2 shows the schematic diagram of a side moving van traveling mechanism in the background;
FIG. 3 shows the schematic diagram of wheel set distribution in the Embodiment 1;
FIG. 4 shows the schematic diagram of a transverse driving mode in the Embodiment 1;
FIG. 5 shows the structure diagram of a wheel set II in the Embodiment 1;
FIG. 6 shows the structure diagram of a wheel set I in the Embodiment 1;
FIG. 7 shows the side view of the wheel set I in the Embodiment 1;
FIG. 8 shows the structure diagram of a mounting plate I in the Embodiment 1;
FIG. 9 shows the side view of the wheel set I in the Embodiment 1, compared with FIG. 7, the mounting plate I less;
FIG. 10 shows the structure diagram of a wheel set III in the Embodiment 1;
FIG. 11 shows the side view of the wheel set III in the Embodiment 1;
FIG. 12 shows the structure diagram of a mounting plate III in the Embodiment 1;
FIG. 13 shows the side view of the wheel set III in the Embodiment 1, compared with FIG. 11, the mounting plate III less;
FIG. 14 shows the schematic diagram of rotating wheel distribution in the Embodiment 2;
FIG. 15 shows the schematic diagram of rotating wheel distribution in the Embodiment 3;
FIG. 16 shows the schematic diagram of a wheel set I in the Embodiment 5;
FIG. 17 shows the schematic diagram of wheel set distribution in the Embodiment 6.

In the figures, 1. wheel set I, 11. mounting plate I, 111. sleeve hole I, 1111. supporting ring I, 12. rotating shaft I, 121. supporting end, 13. rotating wheel I, 14. moving part I, 141. roller I, 15. converting piece I, 151. linkage piece I, 152. rotating arm I, 1521. working surface, 16. positioning piece I, 17. guide rail I, 171. groove I, 18. wheel stand I, 19. axle I, 191. deep groove ball bearing I, 192. thrust ball bearing I, 193. washer I, 2. wheel set II, 21. mounting plate II, 211. stopper, 22. rotating shaft II, 23. wheel stand II, 231. positioning block, 24. rotating wheel II, 25. axle II, 26. steering piece, 3. wheel set III, 31. mounting plate III, 311. sleeve hole III, 3111. supporting ring III, 32. rotating shaft III, 321. supporting end, 33. rotating wheel III, 34. moving part III, 341. roller III, 35. converting piece III, 351. linkage piece III, 352. rotating arm III, 36. positioning piece III, 37. guide rail III, 371. groove III, 38. wheel stand III, 39. axle III, 391. deep groove ball bearing III, 392. thrust ball bearing III, 393. washer III, 4. wheel set IV, 5. fork I, 51. left front wheel I, 52. right front wheel I, 53. left rear wheel I, 54. right rear wheel I, 6. fork II, 61. left front wheel II, 62. right front wheel II, 63. left rear wheel II, 64. right rear wheel II, 71. auxiliary positioning piece, 711. pressing surface, 81. reversible directional wheel set, 82. universal wheel set, 831. variable-state wheel set I, 832. variable-state wheel set II, 84. steering wheel set.

### DETAILED DESCRIPTION OF THE INVENTION

The present disclosure is further described in detail by combining the drawings in the following:

The specific embodiment is only a description of the present disclosure, not a limitation to the present disclosure. A person skilled in the art can make modification without creative contribution to the embodiment after reading the specification, however, the present disclosure is protected by patent law in the scope of claims.

A driving mode of driving along the length direction of fork or approximately along the length direction of fork is defined as the vertical driving mode; and the driving mode of driving along a direction perpendicular to or approximately perpendicular to the length direction of fork is defined as the transverse driving mode.

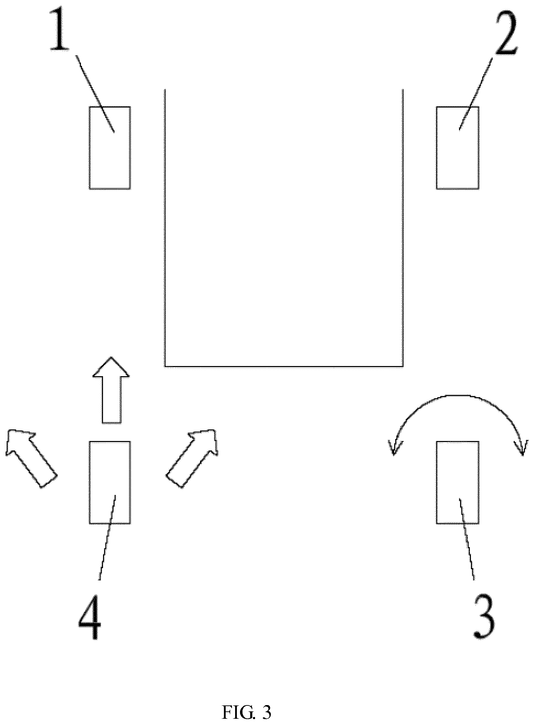

Embodiment 1: as shown in FIG. 3, a traveling mechanism for an industrial vehicle capable of driving in four directions, comprising four wheel sets which are respectively arranged at four different positions of the vehicle body so as to form a quadrangle, wherein the quadrangle is generally a rectangle.

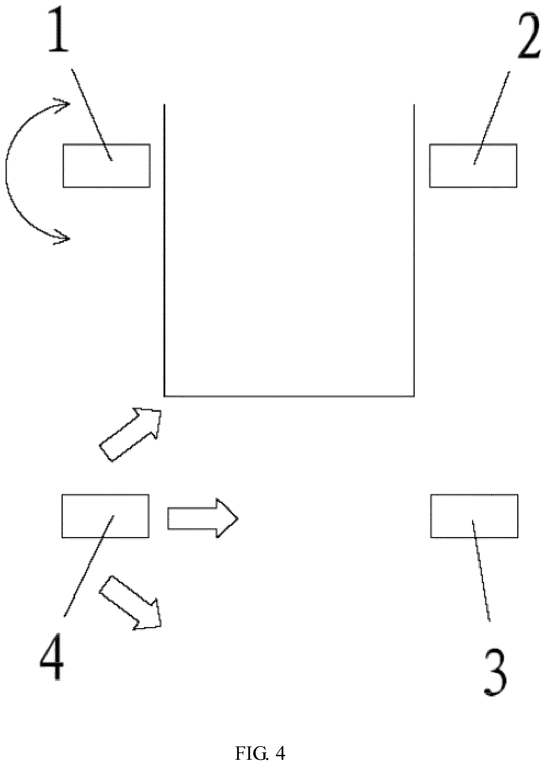

The four wheel sets are respectively a wheel set I 1, a wheel set II 2, a wheel set III 3 and a wheel set IV 4, wherein the wheel set I 1 and the wheel set III 3 are respectively positioned at one diagonal position of the quadrangle; the wheel set II 2 and the wheel set IV 4 are respectively positioned at the other diagonal position of the quadrangle; wherein the wheel set IV 4 is a steering wheel set of which the steering angle is controlled by a steering mechanism and is also a driving wheel set, and the steering mechanism is generally an electric steering device and can steer along with operation of an operator; the wheel set II 2 is always a directional wheel and can steer by 90 degrees so as to adapt to different driving modes; the wheel set I 1 and the wheel set III 3 can be switched between the universal wheel and the directional wheel; in the vertical driving mode, as shown in FIG. 3, the wheel set I 1 is a directional wheel, and the wheel set III 3 is a universal wheel, so that the vehicle can freely turn to drive in the driving mode; in the transverse driving mode, as shown in FIG. 4, the wheel set I 1 is a universal wheel, and the wheel set III 3 is a directional wheel, so that the vehicle can freely turn to drive in the driving mode.

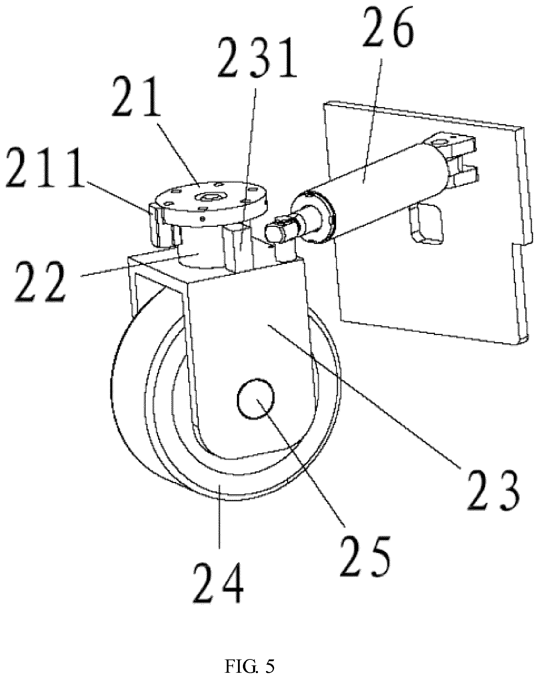

As shown in FIG. 5, the wheel set II 2 includes a mounting plate II 21, a rotating shaft II 22 is rotationally connected to the mounting plate II 21; a wheel stand 23 is fixedly connected to the lower end of the rotating shaft II 22; an axle II 25 is mounted between two sides of the wheel stand 23; a rotating wheel II 24 is arranged on the axle II 25; the wheel set II 2 also includes a steering piece 26 used for realizing 90-degree steering of the rotating wheel II 24; the steering piece 26 in the embodiment is a cylinder II arranged between the body of the moving van and the wheel stand 23, a cylinder barrel of the cylinder II is connected to the body, a piston rod is rotationally connected to the wheel stand 23 and is eccentrically connected to the wheel stand 23, and due to telescopic motion of the cylinder II, the wheel stand 23 is driven to rotate so as to realize 90-degree steering; including a directional wheel state of the wheel set II 2 when the piston rod retracts to a position at which the piston rod cannot retract any more; a stopper 211 is arranged on the mounting plate II 21, a positioning block 231 is arranged on the wheel stand 23, and when the piston rod extends out until the positioning block 231 is pressed against the stopper 211, and the positioning block 231 and the stopper 211 are always kept in a pressing state, another directional wheel state of the wheel set II 2 is formed; certainly, the stopper and the positioning block can be avoided, for example, two telescopic extreme states of the piston rod are determined as two directional states of the wheel set II 2.

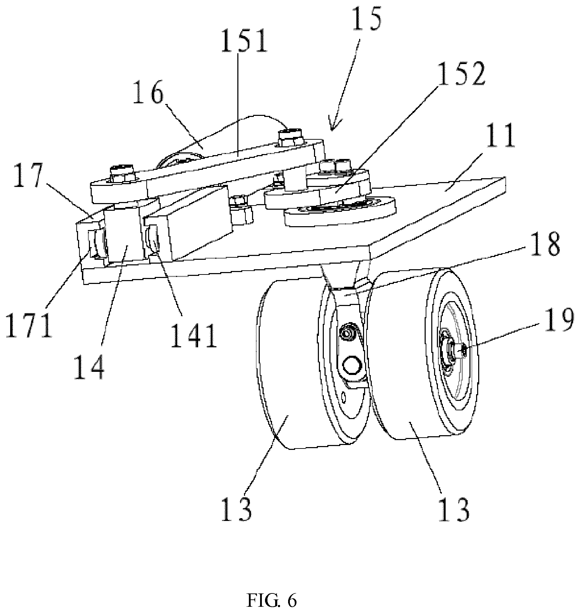

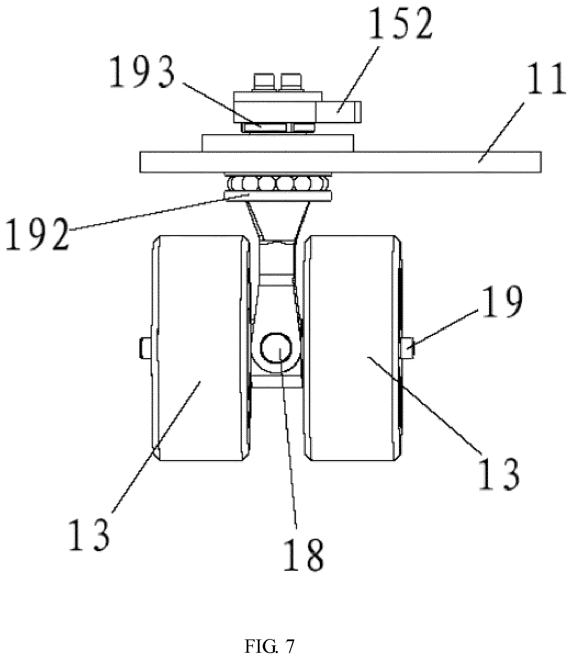

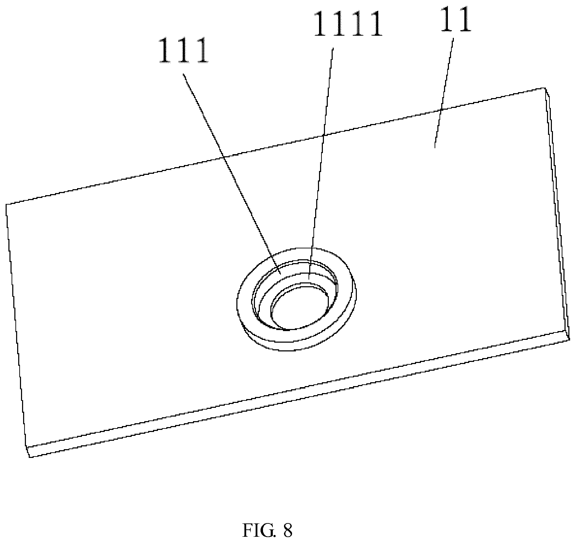

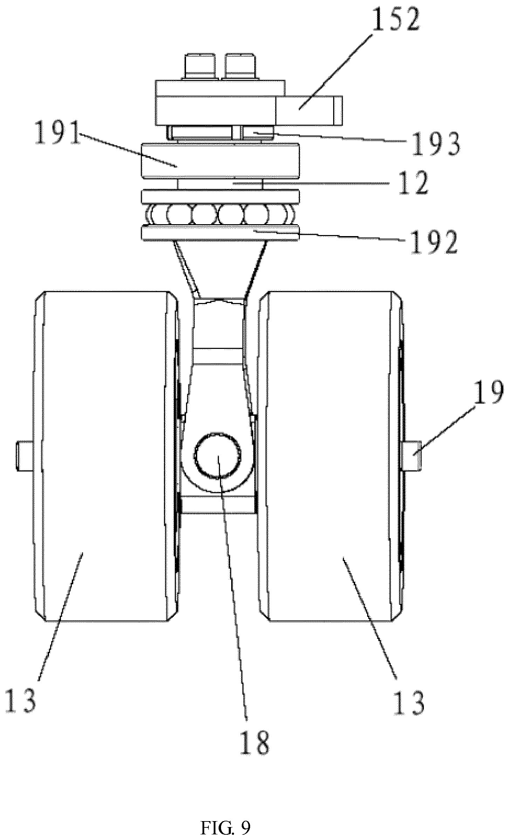

As shown in FIG. 6-9, the wheel set I 1 includes a rotating shaft I 12, wherein a wheel stand I 18 is fixedly connected to the lower end of the rotating shaft I 12; an axle I 19 is connected to the lower part of the wheel stand I 18; and rotating wheels I 13 are respectively arranged on two sides of the axle I 19.

A sleeve hole I 111 is formed in the mounting plate I 11, and a supporting ring I 1111 is arranged on the inner wall of the sleeve hole I 111, so that the sleeve hole I 111 is divided into two longitudinally distributed parts; a deep groove ball bearing I 191 is arranged on the upper part of the sleeve hole I 111, namely above the supporting ring I 1111; a rotating shaft I 12 is positioned below the mounting plate I 11 and includes a supporting end 121; and a thrust ball bearing I 192 is arranged between the supporting end 121 and the supporting ring 1111.

A moving part I 14, a converting piece I 15 which is connected between the moving part I 14 and a rotating shaft I 12 and is used for converting the rotating motion of the rotating shaft I 12 around the axis thereof into a linear reciprocating motion of the moving part I 14, and a positioning piece I 16 capable of fixing the moving part I 14 so as to limit the rotating motion of the rotating shaft I 12 are arranged on the mounting plate I 11.

The converting piece I 15 includes a linkage rod I 151 of which one end is rotationally connected to the moving part I 14, and a rotating arm I 152 of which one end is fixedly connected to the rotating shaft I 12 and the other end is rotationally connected to the other end of the linkage rod I 151; rotational connection of the rotating arm I 152 and the linkage rod I 151 is positioned on an axis deviating from the rotating shaft I 12 in the horizontal direction; the rotating arm I 152 can be fastened to the rotating shaft I 12 by screws in a manner of screwing into the rotating shaft I 12 from top to bottom, and a washer I 193 sleeved to the rotating shaft I 12 can be arranged between the rotating arm I 152 and an inner ring of the deep groove ball bearing I 191, so that the thrust ball bearing I 192 is pressed between the supporting end 121 and the supporting ring 1111 under the action of the screws, and the washer I 193, the inner ring of the deep groove ball bearing I 191 and the rotating arm I 152 can be axially fastened.

The positioning piece I 16 is a cylinder I; the moving part I 14 is a slide block I, and two guide rails I 17 which are symmetrically distributed along the movement track of the moving part I 14 are arranged on the mounting plate 11; grooves I 171 are respectively formed on opposite sides of the two guide rails I 17; and rollers I 141 positioned in the grooves I 171 in a sleeving manner are arranged on two sides of the slide block I.

When the cylinder I does not work, the slide block I linearly reciprocates along the guide rail I 17 under the action of the rotating shaft I 12, then the wheel set I 1 is a universal wheel; when the cylinder I works, the piston rod continuously extends out until the rotating arm I 152 and the linkage rod 151 form a straight line, and the piston rod is always kept in the state, so that the slide block I cannot move, the rotating shaft I 12 also cannot rotate due to the action of the slide block I; and therefore, the wheel set I 1 is converted from the universal wheel to the directional wheel.

Certainly, the positioning rod I 16 is not only limited to a cylinder, it can also be a motor. For example, the rotating motion of a motor output shaft is converted into the linear motion of another piece, so that the moving part I 14 can be fastened or loosened.

The moving part I 14 is also not only a slide block I, and when the positioning piece I 16 is a cylinder I, the moving part I 14 can be a piston rod of the cylinder I.

The converting piece I 15 is also not only the previous setting; for example, that is, a gear meshed with the rotating shaft I 12 is arranged on the mounting plate 11, and a connecting rod which is rotationally connected to the moving part I 14 is rotationally connected to an eccentric position of the gear.

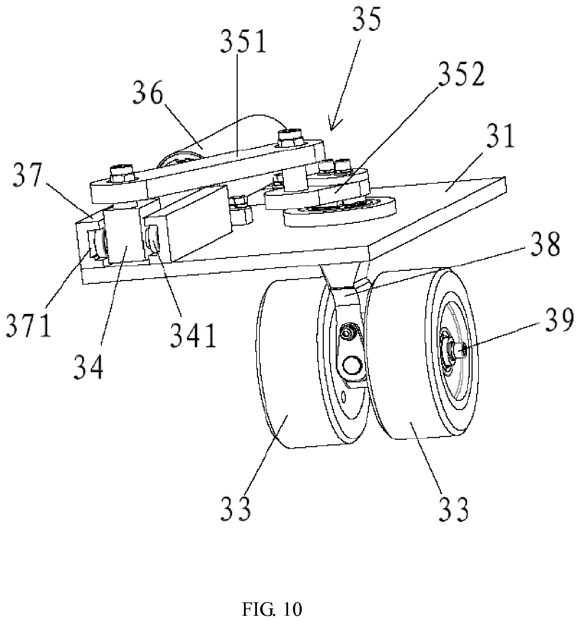

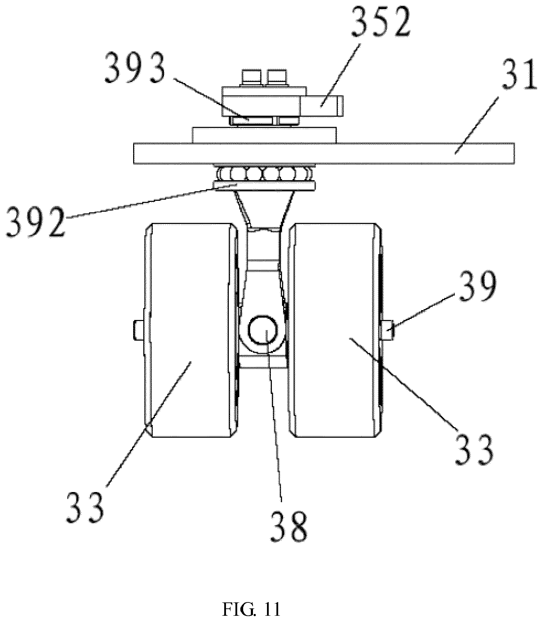

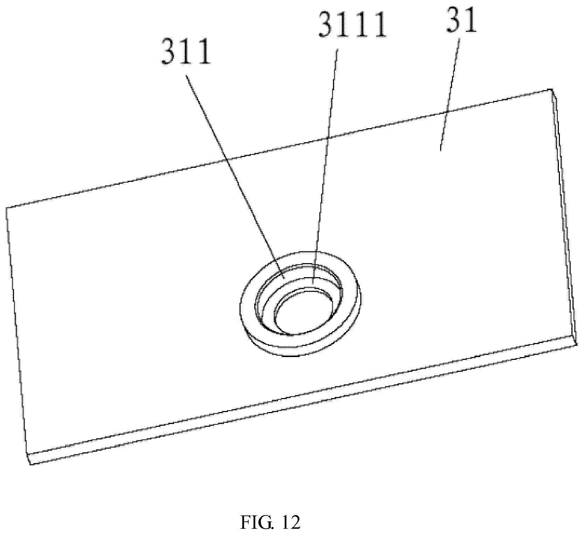

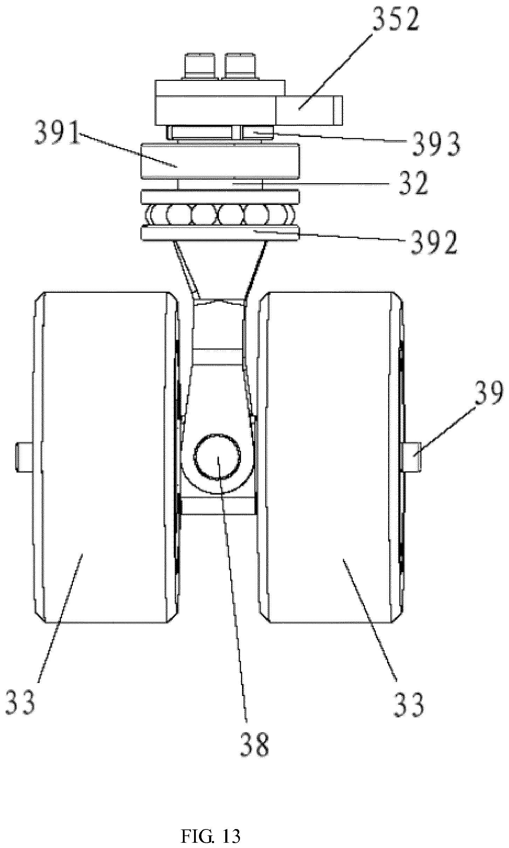

As shown in FIG. 10-13, the wheel set III 3 includes a rotating shaft III 32, wherein a wheel stand III 38 is fixedly connected to the lower end of the rotating shaft III 32; an axle III 39 is connected to the lower part of the wheel stand III 38; and rotating wheels III 33 are respectively arranged on two sides of the axle III 39.

A sleeve hole III 311 is formed in the mounting plate III 31, and a supporting ring III 3111 is arranged on the inner wall of the sleeve hole III 311, so that the sleeve hole III 311 is divided into two longitudinally distributed parts; a deep groove ball bearing III 391 is arranged on the upper part of the sleeve hole III 311, namely above the supporting ring III 3111; a rotating shaft III 32 is positioned below the mounting plate III 31 and includes a supporting end 321; and a thrust ball bearing III 392 is arranged between the supporting end 321 and the supporting ring 3111.

A moving part III 34, a converting piece III 35 which is connected between the moving part III 34 and the rotating shaft III 32 and is used for converting the rotating motion of the rotating shaft III 32 around the axis thereof into a linear reciprocating motion of the moving part III 34, and a positioning piece III 36 capable of fixing the moving part III 34 so as to limit the rotating motion of the rotating shaft III 32 are arranged on the mounting plate III 31.

The converting piece III 35 includes a linkage rod III 351 of which one end is rotationally connected to the moving part III 34, and a rotating arm III 352 of which one end is fixedly connected to the rotating shaft III 32 and the other end is rotationally connected to the other end of the linkage rod III 351; rotational connection of the rotating arm III 352 and the linkage rod III 351 is positioned on an axis deviating from the rotating shaft III 32 in the horizontal direction; the rotating arm III 352 can be fastened to the rotating shaft III 32 by screws in a manner of screwing into the rotating shaft III 32 from top to bottom, and a washer III 393 sleeved to the rotating shaft III 32 can be arranged between the rotating arm III 352 and an inner ring of the deep groove ball bearing III 391, so that the thrust ball bearing III 392 is pressed between the supporting end 321 and the supporting ring 3111 under the action of the screws, and the washer III 393, the inner ring of the deep groove ball bearing III 391 and the rotating arm III 352 can be axially fastened.

The positioning piece III 36 is a cylinder III; the moving part III 34 is a slide block III, and two guide rails III 37 which are symmetrically distributed along the movement track of the moving part III 34 are arranged on the mounting plate 31; grooves III 371 are respectively formed on opposite sides of the two guide rails III 37; and rollers III 341 positioned in the grooves III 371 in a sleeving manner are arranged on two sides of the slide block III.

When the cylinder III does not work, the slide block III linearly reciprocates along the guide rail III 37 under the action of the rotating shaft III 32, then the wheel set III 3 is a universal wheel; when the cylinder III works, the piston rod continuously extends out until the rotating am III 352 and the linkage rod 351 form three straight lines, and the piston rod III is always kept in the state, so that the slide block III cannot move, the rotating shaft III 32 also cannot rotate due to the action of the slide block III; and therefore, the wheel set III 3 is converted from the universal wheel to the directional wheel.

Certainly, the positioning rod III 36 is not only limited to a cylinder, it can also be a motor. For example, the rotating motion of a motor output shaft is converted into the linear motion of another three pieces, so that the moving part III 34 can be fastened or loosened

The moving part III 34 is also not only a slide block III, and when the positioning piece III 36 is a cylinder III, the moving part III 34 can be a piston rod of the cylinder III.

The converting piece III 35 is also not only the previous setting; for example, that is, a gear meshed with the rotating shaft III 32 is arranged on the mounting plate 31, and three connecting rods which are rotationally connected to the moving part III 34 are rotationally connected to an eccentric position of the gear.

The structure of the wheel set I 1 is similar to that of the wheel set III 3, however, the axis direction of the rotating wheel I 13 when the moving part I 14 is fixed is mutually perpendicular to the axis direction of the rotating wheel III 33 when the moving part III 34 is fixed; when the moving part I 14 is fixed, the moving part III 34 is positioned in a linear motion state; and when the moving part III 34 is fixed, the moving part I 14 is positioned in a linear motion state.

The embodiment also includes a mode selection switch capable of switching the driving mode between the vertical driving mode and the transverse driving mode;

When the mode selection switch is selected as the vertical driving mode, the rotating wheel I 13 is switched into a directional state, the rotating wheel III 33 is switched into a follow-up universal state, and the axis direction of the rotating wheel II 24 is fixed at a position which coincides with or is parallel to the axis direction of the rotating wheel I 13 and is perpendicular to a length direction of fork;

When the mode selection switch is selected as the transverse driving mode, the rotating wheel III 33 is switched from a follow-up universal state to a directional state, the rotating wheel I 13 is switched from a directional state to a follow-up universal state, and the rotating wheel II 24 rotates by 90 degrees so as to allow the axis direction thereof is fixed at a position which coincides with or is parallel to the axis direction of the rotating wheel III 33 and is perpendicular to the length direction of fork.

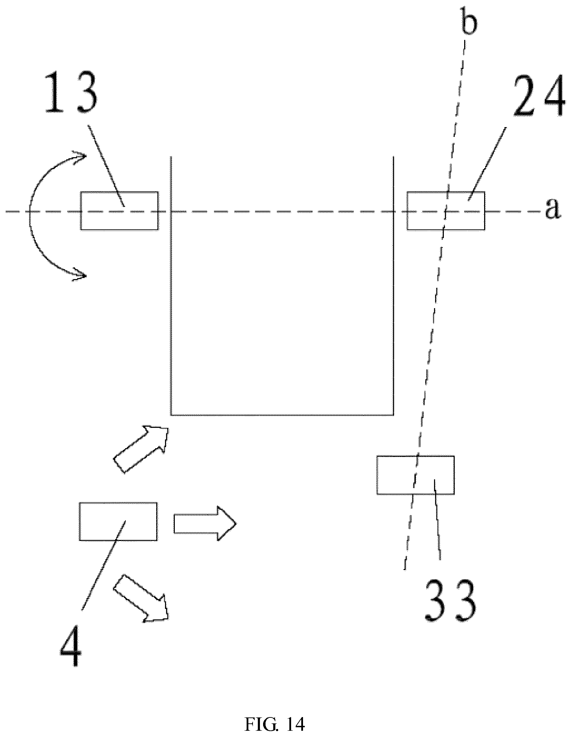

Embodiment 2: the difference from Embodiment 1 is that the quadrangle formed by the four wheel sets is an irregular quadrangle. For example, as shown in FIG. 14, the connecting line 'a' of the rotating wheel I 13 and the rotating wheel II 24 and the connecting line 'b' of the rotating wheel II 24 and the rotating wheel III 33 are not perpendicular to each other.

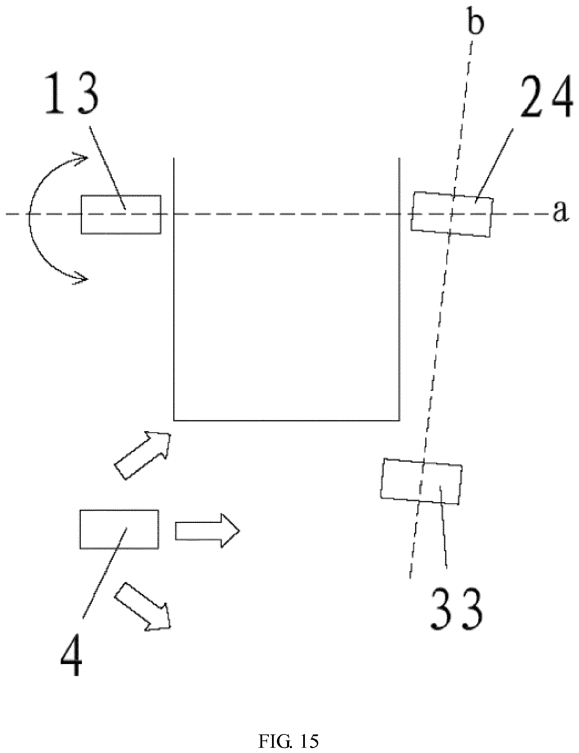

Embodiment 3: the difference from Embodiment 1 is that the quadrangle formed by the four wheel sets is an irregular quadrangle. For example, as shown in FIG. 15, a connecting line 'a' of the rotating wheel I 13 and the rotating wheel II 24 and a connecting line 'b' of the rotating wheel II 24 and the rotating wheel III 33 are not perpendicular to each other; then, the axis of the rotating wheel III 33 coincides with the connecting line 'b'; and the driving mode is a vertical driving mode, the rotating wheel III 33 is switched into a directional state, an acute angle α formed between the axis of the rotating wheel III 33 and the length direction of fork is 5 degrees, under the condition, if the axis direction of the rotating wheel I 13 switched into the directional state is perpendicular to the length direction of fork, the rotating amplitude of the rotating shaft II 22 of the rotating wheel II 24 is 95 degrees; if an included angle formed between the axis direction of the rotating wheel I 13 switched into the directional state and the length direction of fork is 85 degrees, the rotating amplitude of the rotating shaft II 22 of the rotating wheel II 24 is 100 degrees; in a word, under the general condition, according to the variable-state wheel sets, an included angle formed between the axis direction of the rotating wheel in one variable-state wheel set switched into a directional state and the axis direction of the rotating wheel in the other variable-state wheel set switched into a directional state and a rotatable angle of the rotating shaft of the reversible directional wheel set are mutually supplementary angles.

Embodiment 4: the differences between Embodiment 1 or 2 or 3 is that the connecting line 'a' of the rotating wheel I 13 and the rotating wheel II 24 is not perpendicular to the length direction of fork.

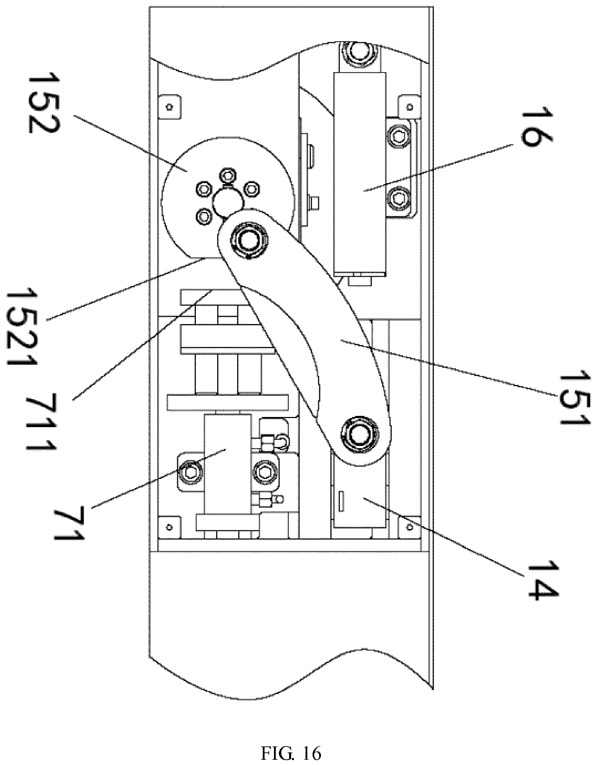

Embodiment 5: the difference from Embodiment 1 is that, as shown in FIG. 16, the rotating arm I 152 includes a working surface 1521; including an auxiliary positioning piece I 71, wherein the auxiliary positioning piece I 71 includes a pressing surface 711, and when the rotating wheel of the wheel set I 1 is switched into a directional state, the pressing surface 711 is pressed against and attached to the working surface 1521, so that the rotating arm I 152 is fixed; then, the force direction between the working surface 1521 and the pressing surface 711 is intersected on the axis of the rotating shaft I 12 fixed with the rotating arm I 152, so that the directional state of the wheel set I 1 is further stabilized.

The auxiliary positioning piece I 71 also can be a cylinder and other controllable telescopic pieces; when switched from a directional state to a follow-up universal state, the auxiliary positioning piece I 71 retracts so as to relieve pressing of the rotating arm I 152, and the rotating arm I 152 is switched into a follow-up universal state under the condition that the positioning piece I 16 does not actively move.

The structure of the embodiment is also applicable to the wheel set III 3.

Embodiment 6: the difference from Embodiment 1 is that, comprising five wheel sets arranged at the bottom of the vehicle body, wherein one wheel set is a steering wheel set 84 of which the structure is similar to that of a wheel set IV in the embodiment 1; another wheel set is a reversible directional wheel set 81, the axis direction of the rotating wheel of the wheel set can be switched between two directions through the rotating action of the rotating shaft of the wheel set, and the structure of the wheel set is similar to that of the wheel set II in the embodiment 1; another wheel set is a universal wheel set 82; the other two are variable-state wheel sets, which are respectively a variable-state wheel set I 831 and a variable-state wheel set II 832, the rotating wheel state of each variable-state wheel set can be switched between a directional state and a follow-up universal state, and the structures of the two wheel sets are similar to those of the wheel set I and wheel set III in embodiment 1.

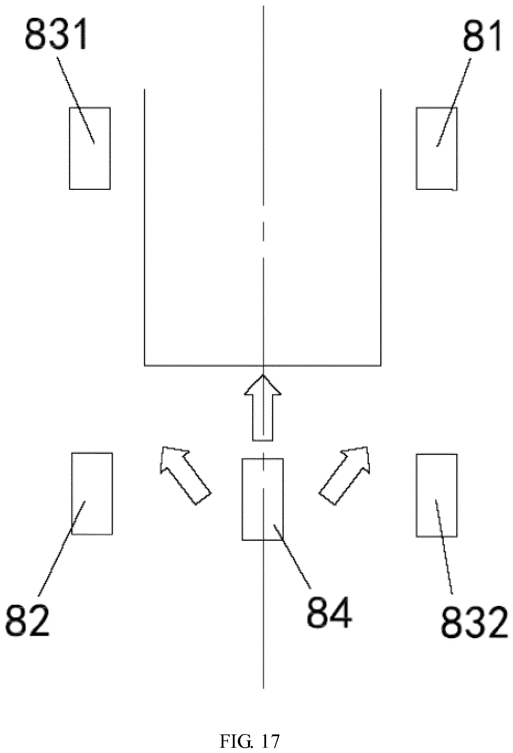

As shown in FIG. 17, the reversible directional wheel set 81, the universal wheel set 82 and the two variable-state wheel sets 83 form a quadrangle, wherein the two variable-state wheel sets are positioned on one diagonal of the quadrangle, the reversible directional wheel set 81 and the universal wheel set 82 are positioned on the other diagonal of the quadrangle, and the steering wheel set 84 is positioned on a central axis of the industrial vehicle positioned between two forks.

The embodiment also can include a mode selection switch capable of switching the driving mode between the vertical driving mode and the transverse driving mode;

When the mode selection switch is selected as the vertical driving mode, the variable-state wheel set I 831 is switched into a directional state, the variable-state wheel set II 832 is switched into a follow-up universal state, and the axis direction of the rotating wheel of the reversible directional wheel set 81 is fixed at a position which coincides with or is parallel to the axis direction of the rotating wheel of the variable-state wheel set I 831 and is perpendicular to the length direction of fork;

When the mode selection switch is selected as the transverse driving mode, the variable-state wheel set II 832 is switched from a follow-up universal state to a directional state, the variable-state wheel set I 831 is switched from a directional state to a follow-up universal state, the rotating wheel of the reversible directional wheel set 81 rotates by 90 degrees so as to allow the axis direction of the rotating wheel to be fixed at a position which coincides with or is parallel to the axis direction of the rotating wheel of the variable-state wheel set II 832 and is parallel to the length direction of fork.

Embodiment 7: an industrial vehicle capable of driving in four directions, including any one of embodiments 1-6.

## Claims

1. A traveling mechanism for an industrial vehicle capable of driving in four directions, comprising four wheel sets arranged at the bottom of the vehicle body which can be sequentially connected to form a quadrangle, wherein one wheel set is a rotating wheel set, another wheel set is a reversible directional wheel set, and the axis direction of the rotating wheels can be switched between two directions through the rotating action of a rotating shaft of the wheel set; the other two wheel sets are variable-state wheel sets, and the rotating wheel state can be switched between a directional state and a follow-up universal state.

2. The traveling mechanism for the industrial vehicle capable of driving in four directions according to the Claim 1, wherein the rotating wheel set and the reversible directional wheel set are positioned at a diagonal position of the quadrangle, and the two variable-state wheel sets are positioned at another diagonal position of the quadrangle.

3. The traveling mechanism for the industrial vehicle capable of driving in four directions according to Claim 2, also comprising a mode selection switch capable of switching a driving mode between a vertical driving mode and a transverse driving mode; when the mode selection switch is selected as the vertical driving mode, the rotating wheels in one wheel set in the two variable-state wheel sets adjacent to the rotating wheel set are switched into a directional state, while the rotating wheels in the other wheel set of the two wheel sets are switched into a follow-up universal state; and moreover, the axis direction of rotating wheels of the reversible directional wheel set diagonal to the rotating wheel set is fixed at a position which coincides with or is parallel to the axis direction of the rotating wheels of the variable-state wheel set switched into the directional state; and when the mode selection switch is selected as the transverse driving mode, the rotating wheels positioned in the follow-up universal state in the two variable-state wheel sets adjacent to the rotating wheel set are switched into a directional state, another rotating wheel positioned in a directional state is switched into a follow-up universal state, and rotating wheels in the reversible directional wheel set diagonal to the rotating wheel set rotate so as to allow the axis direction of the rotating wheels to be fixed at a position which coincides with or is parallel to the axis direction of the rotating wheels switched into the directional state.

4. The traveling mechanism for the industrial vehicle capable of driving in four directions according to Claim 1, or 2 or 3, wherein the variable-state wheel sets comprise rotating shafts driving the rotating wheels to steer, and limiting and positioning pieces capable of locking and loosening the rotating shafts to rotate and move.

5. The traveling mechanism for the industrial vehicle capable of driving in four directions according to the Claim 4, wherein the limiting and positioning pieces comprise moving parts, converting pieces which are connected between the moving parts and the rotating shafts and are used for converting the rotating motion of the rotating shafts around the axis thereof into a linear reciprocating motion of the moving parts, as well as positioning pieces capable of fixing the moving parts so as to limit the rotating motion of the rotating shafts.

6. The traveling mechanism for the industrial vehicle capable of driving in four directions according to the Claim 5, wherein converting piece comprises a linkage rod of which one end is rotationally connected to the moving part, and a rotating arm of which one end is fixedly connected to the rotating shaft and the other end is rotationally connected to the other end of the linkage rod; rotational connection of the rotating arm and the linkage rod is positioned on an axis deviating from the rotating shaft in the horizontal direction.

7. The traveling mechanism for the industrial vehicle capable of driving in four directions according to Claim 6, wherein the rotating arm comprises a working surface; the limiting and positioning piece also comprises an auxiliary positioning piece; and when the rotating wheels in the corresponding variable-state wheel set are switched into a directional state, the auxiliary positioning piece comprises a pressing surface pressing on the working surface, so that the rotating arm is fixed.

8. The traveling mechanism for the industrial vehicle capable of driving in four directions according to the Claim 1, or 2 or 3, wherein the reversible directional wheel set diagonal to the rotating wheel set comprises a mounting plate (21), a rotating shaft (22) which is rotationally supported on the mounting plate (21), a wheel stand (23) which is fixedly arranged on the rotating shaft (22), a rotating wheel (24) arranged on the wheel stand (23), and a steering piece (26) used for driving the wheel stand (23) to rotate.

9. The traveling mechanism for the industrial vehicle capable of driving in four directions according to Claim 1, or 2 or 3, wherein the rotating wheel set refers to an electric driving wheel with an electric steering device.

10. A traveling mechanism for an industrial vehicle capable of driving in four directions, comprising five wheel sets arranged at the bottom of the vehicle body, wherein one wheel set is a rotating wheel set; another wheel set is a reversible directional wheel set, and the axis direction of the rotating wheels can be switched between two directions through the rotating action of a rotating shaft of the wheel set; another wheel set is a universal wheel set; and the other two are variable-state wheel sets, and the rotating wheel state can be switched between a directional state and a follow-up universal state; a reversible directional wheel set, a universal wheel set and two variable-state wheel sets form a quadrangle, wherein the two variable-state wheel sets are positioned on one diagonal of the quadrangle, the reversible directional wheel set and the universal wheel set are positioned on another diagonal of the quadrangle, and the rotating wheel set is positioned on a central axis of the industrial vehicle positioned between two forks.

11. An industrial vehicle, comprising the traveling mechanism according to any one of Claims 1-10.
